# EUROPÄISCHE PATENTSCHRIFT

(11) **EP 3 770 647 B1**
(45) Veröffentlichungstag und Bekanntmachung des Hinweises auf die Patenterteilung: **04.01.2023**
(21) Anmeldenummer: 19188044.2
(22) Anmeldetag: 24.07.2019
(51) Int. Cl.: G01V 8/20, G01V 8/22

(54) **LICHTSCHRANKENANORDNUNG UND VERFAHREN ZUR JUSTAGE EINER LICHTSCHRANKENANORDNUNG**
LIGHT BARRIER ARRANGEMENT AND METHOD FOR ADJUSTING A LIGHT BARRIER ARRANGEMENT
AGENCEMENT DE BARRIÈRE LUMINEUSE ET PROCÉDÉ D'AJUSTEMENT D'UN AGENCEMENT DE BARRIÈRE LUMINEUSE

(43) Veröffentlichungstag der Anmeldung: 27.01.2021
(73) Patentinhaber: Leuze electronic GmbH + Co. KG, 73277 Owen/Teck (DE)
(72) Erfinder: Aldiek, Norbert, 73230 Kirchheim/Teck (DE); Tull, Andreas, 82229 Seefeld (DE); Olbrich, Sebastian, 80992 München (DE); Koperski, Joachim, 85521 Ottobrunn (DE); Eder, Alexander, 86928 Hofstetten (DE)
(74) Vertreter: Ruckh, Rainer Gerhard

(56) Entgegenhaltungen:
- US-A- 6 124 586
- US-A1- 2013 292 554

## Beschreibung

Die Erfindung betrifft eine Lichtschrankenanordnung und ein Verfahren zur Justage einer Lichtschrankenanordnung.

Derartige Lichtschrankenanordnungen dienen allgemein zur Erfassung von Objekten in einem Überwachungsbereich. Die Objekterfassung erfolgt nach dem Lichtschrankenprinzip. Hierzu wird in einer Auswerteeinheit geprüft, ob die von einem Sender emittierten Lichtstrahlen auf einen zugeordneten Empfänger ungehindert auftreffen oder ob der Strahlengang der Lichtstrahlen durch einen Objekteingriff unterbrochen ist.

Im einfachsten Fall besteht die Lichtschrankenanordnung aus einer einzelnen Lichtschranke, das heißt die Lichtschrankenanordnung umfasst eine Sendeeinheit mit nur einem Sender und eine Empfangseinheit mit nur einem Empfänger. Generell kann die Lichtschrankenanordnung auch als Lichtvorhang ausgebildet sein. In diesem Fall umfasst die Lichtschrankenanordnung mehrere Paare von Sendern und Empfängern.

Damit die Lichtschrankenanordnung funktionsfähig ist, muss diese vor Inbetriebnahme justiert werden. Hierzu müssen die Sendeeinheit und Empfangseinheit so gegeneinander justiert werden, dass die Lichtstrahlen des oder der Sender der Sendeeinheit auf den oder die zugeordneten Empfänger der Empfangseinheit treffen.

Ein Problem hierbei ist, dass die Sendeeinheit und die Empfangseinheit oft in relativ großen Abständen zueinander angeordnet sind. Dieses Problem wird dadurch noch verschärft, dass die Öffnungswinkel der Sender beziehungsweise Empfänger zur Vermeidung gegenseitiger Beeinflussungen benachbarter Sender beziehungsweise Empfänger oder auch benachbarter Lichtschrankenanordnungen sehr gering gehalten werden.

Insbesondere bei Lichtschrankenanordnungen, die als Sicherheitssensoren ausgebildet sind und dementsprechend in sicherheitstechnischen Applikationen eingesetzt werden, werden besonders kleine Öffnungswinkel der Sender und Empfänger gefordert.

Eine Ausrichtung der Lichtschrankenanordnung direkt anhand der Lichtstrahlen des oder der Sender ist in der Regel nicht möglich, da typischerweise die Sender Lichtstrahlen im nicht sichtbaren Wellenlängenbereich, insbesondere im Infrarotbereich, emittieren. Daher sehen bekannte Justagevorrichtungen Zusatzelemente zur Ausrichtung der Sendeeinheit und der Empfangseinheit vor.

Eine Möglichkeit der Justage besteht darin, ein Ausrichtlaser als Zusatzelement an der Sendeeinheit beziehungsweise Empfangseinheit anzubringen. Der Ausrichtlaser sendet sichtbares Laserlicht zur gegenüberliegenden Einheit aus. Anhand dieser sichtbaren Richtstrahlen kann ein Ausrichten der Sendeeinheit beziehungsweise Empfangseinheit erfolgen. Nachteilig hierbei ist jedoch, dass die Anbringung des Ausrichtlasers zu der Sendeeinheit oder Empfangseinheit einen erhöhten Installationsaufwand mit sich bringt. Zudem muss der Ausrichtlaser selbst an der Sendeeinheit oder Empfangseinheit in geeigneter Weise justiert werden, was den Justageaufwand erheblich erhöht.

Weiterhin ist es bekannt, bei Lichtvorhängen mit mehreren Paaren von Sendern und Empfängern einen Empfänger vorzusehen, dessen Empfangswinkelbereich erheblich größer ist als der der anderen Empfänger. Anhand dieses speziell geänderten Empfängers kann zwar die Sendeeinheit, nicht aber die Empfangseinheit des Lichtvorhangs ausgerichtet werden.

Weiterhin ist nachteilig, dass zur Justage der dem Empfänger zugeordnete Sender verwendet wird, der Lichtstrahlen im nicht sichtbaren Wellenlängenbereich emittiert. Eine visuelle Kontrolle anhand eines sichtbaren Richtstrahls ist daher nicht möglich. Die Ausrichtung kann demzufolge nur anhand der am Empfänger empfangenen Empfangslichtmenge kontrolliert werden.

Die US 6,124,586 A betrifft eine Lichtschranke oder einen Lichtvorhang mit einer Ausrichthilfe zur gegenseitigen geometrischen Ausrichtung zweier einander gegenüberliegenden, jeweils ein oder mehrere Sender und Empfänger aufweisenden Leisten, mit einer ersten und einer zweiten jeweils miteinander zusammenwirkende Sender und/oder Empfänger oder Reflektoren aufweisenden Leiste, und wenigstens einer zur ersten Leiste definiert angeordneten Lichtquelle zum Aussenden eines Richtstrahls, einer Speise- und Steuereinheit für die Lichtquelle. An der ersten Leiste ist eine Lichtquelle des sichtbaren Spektralbereichs zur Erzeugung eines ersten sichtbaren Richtstrahls angeordnet. An der zweiten Leiste sind Umlenkmittel zum Umlenken des ersten Richtstrahls und zur Erzeugung eines zweiten, gegenläufigen Richtstrahls in Abstand zum ersten Richtstrahl angeordnet. Alternativ sind wenigstens eine erste und eine zweite Lichtquelle jeweils des sichtbaren Spektralbereichs vorgesehen, welche an oder in der ersten bzw. zweiten Leiste angeordnet sind, und welche zur Erzeugung von zwei zueinander gegenläufigen, in Abstand voneinander angeordneten sichtbaren Richtstrahlen dienen.

Die US 2013/0292554 A1 betrifft ein optisches Modul für eine optische Einheit eines Lichtvorhangs, der ein Schutzfeld überwacht. Das optische Modul umfasst mindestens ein Strahlung emittierendes und/oder Strahlung empfangendes Element zum Senden und/oder Empfangen eines Strahlenbündels, das den Lichtvorhang ausbildet, einen Modulgrundkörper zum Montieren eines Strahlungssender-/Empfängerträgers, der das mindestens eine Sende- und/oder Empfangselement zum Senden und/oder Empfangen der Strahlung trägt, wobei der Modulgrundkörper mindestens ein Justierelement zum Ausrichten des optischen Moduls innerhalb eines Stützelements, das ein äußeres Gehäuse der optischen Einheit bildet, aufweist, wobei das Justierelement einen Vorsprung umfasst, der in eine Richtung entlang der optischen Achse des mindestens einen Strahlenbündels verläuft, wobei der Vorsprung zum Montieren des optischen Moduls innerhalb des Stützelements mit einer inneren Oberfläche des Stützelements in direktem Kontakt ist, die quer zur optischen Achse des mindestens einen Strahlenbündels verläuft.

Der Erfindung liegt die Aufgabe zugrunde, eine Lichtschrankenanordnung bereitzustellen, welche einfach und exakt justiert werden kann.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Lichtschrankenanordnung zur Erfassung von Objekten in einem Überwachungsbereich mit einer Sendeeinheit, welche wenigstens einen Lichtstrahlen emittierenden Sender aufweist, mit einer Empfangseinheit, welche wenigstens einen Lichtstrahlen empfangenden Empfänger aufweist, und mit einer Auswerteeinheit, in welcher in Abhängigkeit von Empfangssignalen des Empfängers ein Objektfeststellungssignal generiert wird. In der Sendeeinheit und/oder in der Empfangseinheit ist eine Senderanordnung integriert, welche sichtbare Pilotlichtstrahlen in einer vorgegebenen Richtung relativ zu Strahlachsen der Sender beziehungsweise Empfänger emittiert und welche ein Mittel zur Ausrichtung der Sendeeinheit relativ zur Empfangseinheit ausbildet.

Die Erfindung betrifft weiterhin ein Verfahren zur Justage einer Lichtschrankenanordnung.

Die erfindungsgemäße Lichtschrankenanordnung kann prinzipiell als Lichtschranke ausgebildet sein. Dann weist die Sendeeinheit nur einen Sender auf. Entsprechend weist die Empfangseinheit nur einen Empfänger auf.

Besonders vorteilhaft bildet diese einen Lichtvorhang mit mehreren Paaren von Lichtstrahlen emittierenden Sendern und Lichtstrahlen empfangenden Empfängern aus.

Ein wesentlicher Vorteil der Erfindung besteht darin, dass mit der Senderanordnung eine visuelle Ausrichtung der Sendeeinheit beziehungsweise der Empfangseinheit ermöglicht wird, wodurch eine schnelle und exakte Justage der Lichtschrankenanordnung ermöglicht wird.

Das Grundprinzip der Erfindung besteht darin, dass in den beiden räumlich getrennten Einheiten der Lichtschrankenanordnung, nämlich der Sendeeinheit und der Empfangseinheit, nicht nur Sender beziehungsweise Empfänger, die zur Objekterfassung dienen integriert sind. Vielmehr ist in der Sendeeinheit und/oder Empfangseinheit zusätzlich eine Senderanordnung integriert, die sichtbare Pilotlichtstrahlen emittiert. Diese sichtbaren Pilotlichtstrahlen der Senderanordnung, die in einer ersten Einheit integriert sind, werden auf die gegenüberliegende zweite Einheit abgebildet. Anhand des Auftreffpunkts der Pilotlichtstrahlen auf der zweiten Einheit, die als sichtbarer Lichtfleck leicht verfolgt werden kann, können Fehlausrichtungen leicht festgestellt werden und durch ein Verdrehen oder Verschieben der ersten Einheit korrigiert werden. Damit kann die erste Einheit einfach und schnell ausgerichtet werden. Um beide Einheiten ausrichten zu können, ist vorteilhaft in jeder Einheit eine Pilotlichtstrahlen emittierende Senderanordnung integriert.

Ein wesentlicher Vorteil der Erfindung besteht darin, dass die Senderanordnungen in der Sendeeinheit oder Empfangseinheit integriert sind, wobei vorteilhaft sowohl die Sendeeinheit als auch die Empfangseinheit ein Gehäuse aufweisen, in welchem die Senderanordnung angeordnet werden kann. Für die Justage müssen daher an der Lichtschrankenanordnung keine separaten Komponenten nachträglich montiert werden, was die Montage erheblich aufwändiger gestalten würde. Vielmehr können alle Komponenten, die für die Justage benötigt werden, bereits im Fertigungsprozess der Lichtschrankenanordnung in der Sendeeinheit beziehungsweise Empfangseinheit integriert werden.

Dabei ist weiter vorteilhaft, dass durch geeignete Fertigungseinrichtungen, insbesondere Mess- und Prüfeinheiten, die Komponenten der Senderanordnung in exakten Bezugspositionen relativ zu den sende- beziehungsweise empfangsseitigen Sensor-Komponenten zur Objekterfassung angebracht werden können, sodass die Strahlrichtung der Pilotlichtstrahlen definiert und unveränderbar zu den Strahlachsen der Sender beziehungsweise Empfänger verläuft. Dies stellt einen wesentlichen Vorteil dar, da damit allein durch die Ausrichtung des Pilotlichtstrahls eine Ausrichtung der Sender beziehungsweise Empfänger bewerkstelligt ist.

Erfindungsgemäß weist die oder jede Senderanordnung ein Pilotlichtstrahlen emittierendes Sendeelement und ein Optikelement auf, wobei das Sendeelement im Fokus des Optikelements angeordnet ist.

Das Sendeelement wird im Fertigungsprozess in einer definierten Einbaulage relativ zu den Sendern beziehungsweise Empfängern der Sendeeinheit beziehungsweise Empfangseinheit angeordnet.

Vorteilhaft sind hierbei der oder die Sender einerseits und der oder die Empfänger andererseits jeweils auf einer Leiterplattenanordnung angeordnet, und das Sendeelement der wenigstens einen Senderanordnung auf einer der Leiterplattenanordnung angeordnet.

Besonders vorteilhaft umfasst die oder jede Leiterplattenanordnung nur eine Leiterplatte.

Im Fertigungsprozess kann somit das Sendeelement mit den Sendern oder Empfängern auf der Leiterplattenanordnung platziert werden, vorzugsweise in einem automatisierten Fertigungsprozess. Dadurch ist das Sendeelement in einer exakten Position relativ zu den Sendern beziehungsweise Empfängern ausgerichtet.

Erfindungsgemäß ist dem oder den Sendern einerseits und dem oder den Empfängern andererseits eine Optikanordnung zugeordnet, wobei das Optikelement der wenigstens einen Senderanordnung Bestandteil einer Optikanordnung ist.

Besonders vorteilhaft ist die oder jede Optikanordnung ein Linsenarray.

Durch die Integration des Optikelements in die Optikanordnung, insbesondere das Linsenarray ist gewährleistet, dass eine definierte Strahlrichtung der Pilotlichtstrahlen relativ zu den Strahlachsen der Sender beziehungsweise Empfänger erhalten wird.

Aufgrund von Fertigungstoleranzen kann es zu geringen Fehlausrichtungen des Sendeelements relativ zu den Sendern beziehungsweise Empfängern kommen. Um auch derartige Ungenauigkeiten zu beseitigen ist es vorteilhaft, dass im Fokus des Optikelements eine Blende vorgesehen ist.

Mit der Blende können nicht nur Fehlausrichtungen des Sendeelements korrigiert werden. Vielmehr wird auch eine randscharfe Abbildung des Pilotlichtstrahls nach Unendlich bewerkstelligt, wodurch ein definierter, scharfer Lichtfleck an der gegenüberliegenden Sendeeinheit oder Empfangseinheit erzeugt wird, der eine exakte und einfache Justage ermöglicht.

Gemäß einer vorteilhaften Ausgestaltung sind in der Sendeeinheit und der Empfangseinheit jeweils wenigstens eine Senderanordnung integriert, wobei die Senderanordnungen vorteilhaft identisch ausgebildet sind.

Dadurch, dass sowohl in der Sendeeinheit als auch in der Empfangseinheit jeweils wenigstens eine Senderanordnung integriert ist, können beide Einheiten ausgerichtet werden. Wenn in einer Sendeeinheit oder Empfangseinheit mehrere Senderanordnungen integriert sind, werden entsprechend mehrere sichtbare Lichtflecke der Pilotlichtstrahlen auf der gegenüberliegenden Einheit abgebildet, wodurch Verkippungen der Einheiten noch besser erkannt werden können.

Durch die identische Ausbildung der Senderanordnung wird die Anzahl unterschiedlicher Teile gering gehalten, was fertigungstechnisch vorteilhaft ist.

Gemäß einer vorteilhaften Ausgestaltung bildet eine Frontseite eines Gehäuses ein Visualisierungsmittel aus, auf welchem die Pilotlichtstrahlen sichtbar sind.

Die Visualisierungsmittel sind generell von Flächenelementen gebildet, deren Oberflächen so beschaffen sind, dass auf diesen der Lichtfleck des jeweiligen Pilotlichtstrahls gut sichtbar ist.

Besonders gut sichtbar sind die Lichtflecke auf Visualisierungsmitteln, die Reflektorflächen aufweisen. Generell können die Visualisierungsmittel in die Frontseite des Gehäuses integriert werden oder als separate Elemente auf der Frontseite befestigt werden. Beispielsweise können zur Ausbildung von Reflektorflächen Reflektorfolien vorgesehen sein, die auf dem Gehäuse in beliebigen Positionen und Geometrien aufgebracht werden, insbesondere dort aufgeklebt werden.

Die Erfindung wird im Folgenden anhand der Zeichnungen erläutert. Es zeigen:
- Figur 1:: Ausführungsbeispiel der erfindungsgemäßen Lichtschrankenanordnung.
- Figur 2:: Teildarstellung der Frontseite der Sendeeinheit der Lichtschrankenanordnung gemäß Figur 1.
- Figur 3:: Teildarstellung der Sendeeinheit in einem Längsschnitt.
- Figur 4:: Teildarstellung der Frontseite der Empfangseinheit der Lichtschrankenanordnung gemäß Figur 1.
a) Erste Ausführungsform
b) Zweite Ausführungsform
- Figur 5:: Perspektive Darstellung der Lichtschrankenanordnung gemäß Figur 1 bei relativ zur Empfangseinheit justierten Sendeeinheit.

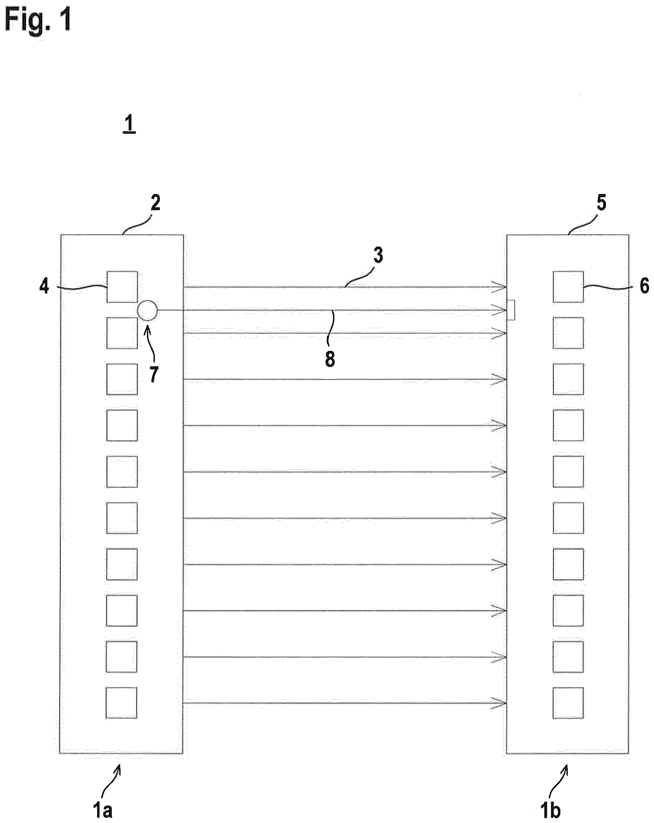

Figur 1 zeigt ein Ausführungsbeispiel der erfindungsgemäßen Lichtschrankenanordnung. Die Lichtschrankenanordnung kann im einfachsten Fall in Form einer Lichtschranke ausgebildet sein. Im vorliegenden Fall ist die Lichtschrankenanordnung in Form eines Lichtvorhangs 1 ausgebildet.

Der Lichtvorhang 1 weist eine in einem ersten Gehäuse 2 integrierte Sendeeinheit 1a mit einer Anzahl von Lichtstrahlen 3 emittierenden Sendern 4 in Form von Leuchtdioden auf. Der Sender 4 emittiert Lichtstrahlen 3 im nicht sichtbaren Wellenlängenbereich, vorzugsweise im Infrarotbereich. Der Betrieb der Sender 4 wird von einer nicht dargestellten Steuereinheit gesteuert. Weiterhin weist der Lichtvorhang 1 eine in einem zweiten Gehäuse 5 integrierte Empfangseinheit 1b mit einer der Anzahl von Sendern 4 entsprechenden Anzahl von Empfängern 6 in Form von Photodioden auf. Die Empfangssignale der Empfänger 6 werden in einer nicht dargestellten Auswerteeinheit ausgewertet.

Die Sendeeinheit 1a und die Empfangseinheit 1b sind an gegenüberliegenden Rändern eines Überwachungsbereichs angeordnet.

Der Lichtvorhang 1 ist als Sicherheitssensor ausgebildet und weist daher einen fehlersicheren Aufbau auf. Insbesondere weist die Auswerteeinheit einen redundanten Aufbau auf, beispielsweise in Form zweier sich gegenseitig zyklisch überwachender Rechnereinheiten.

Jeweils ein Sender 4 bildet mit dem zugeordneten, gegenüberliegenden Empfänger 6 ein Sender-Empfänger-Paar. Die Sender-Empfänger-Paare werden in bekannter Weise optisch synchronisiert, sodass die Sender 4 und Empfänger 6 der Sender-Empfänger-Paare zyklisch einzeln nacheinander aktiviert werden. Damit erfolgt während aufeinanderfolgender Scans jeweils eine Abtastung des Überwachungsbereichs, wobei während jedes Scans alle Sender-Empfänger-Paare nacheinander einmal aktiviert werden.

Im vorliegenden Fall weist der Lichtvorhang 1 zehn Sender-Empfänger-Paare auf. Natürlich kann auch eine andere Anzahl von Sender-Empfänger-Paare vorgesehen sein.

Figur 1 zeigt den Lichtvorhang 1 bei freiem Überwachungsbereich. Bei freiem Überwachungsbereich treffen die Lichtstrahlen 3 aller Sender 4 ungehindert auf die zugeordneten Empfänger 6.

Objekteingriffe im Überwachungsbereich werden generell durch Unterbrechungen von Lichtstrahlen 3 eines oder mehrerer Sender-Empfänger-Paare detektiert, wobei hierzu vorteilhaft in der Auswerteeinheit eine Schwellwertbewertung der Empfangssignale der Empfänger 6 durchgeführt wird.

Um eine einwandfreie Funktion des Lichtvorhangs 1 zu gewährleisten, wird der Lichtvorhang 1 vor Inbetriebnahme justiert, sodass die Lichtstrahlen 3 aller Sender 4 bei freiem Überwachungsbereich exakt auf die zugeordneten Empfänger 6 treffen.

Eine Vorjustage kann mit einer Wasserwaage erfolgen, um die Sendeeinheit 1a und Empfangseinheit 1b in gleichen Höhenniveaus zu installieren und diese eben auf einer Unterlage zu positionieren.

Um gegenseitige Verdrehungen der Sendeeinheit 1a und der Empfangseinheit 1b zu korrigieren, weist der Lichtvorhang 1 wenigstens eine Senderanordnung 7 in der Sendeeinheit 1a und/oder Empfangseinheit 1b auf.

Bei der Ausführungsform gemäß Figur 1 ist nur in der Sendeeinheit 1a eine Senderanordnung 7 integriert, die Pilotlichtstrahlen 8 im sichtbaren Wellenlängenbereich emittiert, die auf die Frontseite der gegenüberliegenden Empfangseinheit 1b abgebildet werden. Mit dieser Senderanordnung 7 kann die Sendeeinheit 1a relativ zur Empfangseinheit 1b ausgerichtet werden. Alternativ oder zusätzlich kann in der Sendeeinheit 1a eine sichtbare Pilotlichtstrahlen 8 emittierende Senderanordnung 7 vorgesehen sein. Diese Pilotlichtstrahlen 8 werden auf der Frontseite der Sendeeinheit 1a als sichtbarer Lichtfleck abgebildet.

Die Anordnung der Figur 1 kann dadurch erweitert sein, dass in der Sendeeinheit 1a mehrere, vorzugsweise identische Senderanordnungen 7 in Längsrichtung der Sendeeinheit 1a beabstandet zueinander vorgesehen sind. Entsprechendes gilt für die Empfangseinheit 1b. Mit mehreren Senderanordnungen 7 in einer Einheit (Sendeeinheit 1a oder Empfangseinheit 1b) werden mehrere Pilotlichtstrahlen 8 auf die gegenüberliegende Einheit (Empfangseinheit 1b oder Sendeeinheit 1a) als sichtbare Lichtflecke abgebildet. Dadurch können Verkippungen zwischen der Sendeeinheit 1a und Empfangseinheit 1b noch leichter erkannt und korrigiert werden.

Generell sieht eine Bedienperson anhand der abgebildeten Lichtflecke eine Fehlstellung und kann diese durch Verdrehen der Sendeeinheit 1a oder Empfangseinheit 1b, die auf einer entsprechend Befestigungsvorrichtung gelagert ist, korrigieren.

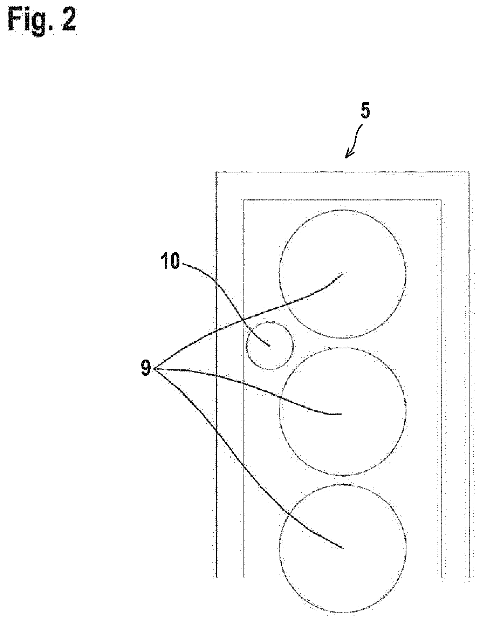

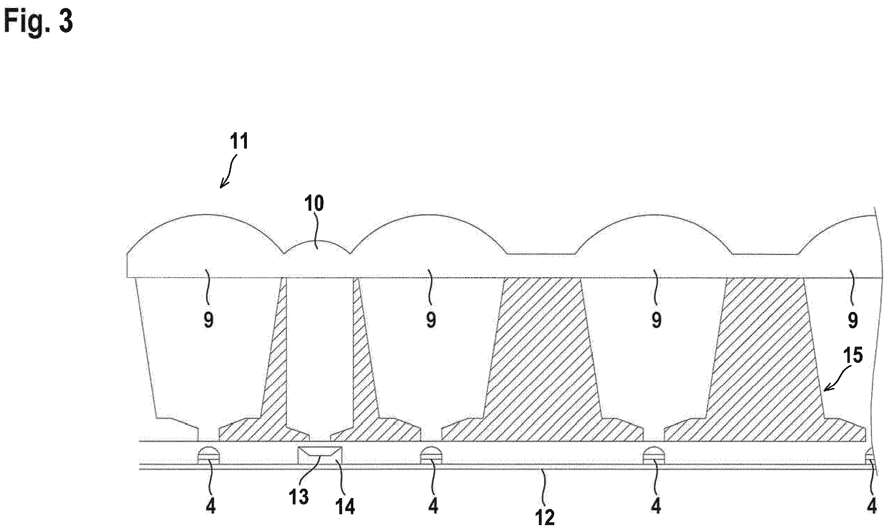

Die Figuren 2 und 3 zeigen die konstruktive Ausgestaltung der in der Sendeeinheit 1a integrierten Senderanordnung 7. Figur 2 zeigt eine Linearanordnung von Sendeoptiken 9, wobei jede Sendeoptik 9 einem Sender 4 zugeordnet ist und zur Strahlformung der Lichtstrahlen 3 dieses Senders 4 dient. Alle Sendeoptiken 9 sind identisch ausgebildet. Seitlich versetzt zwischen der ersten und zweiten Sendeoptik 9 befindet sich ein Optikelement 10 in Form einer Linse, das Bestandteil der Senderanordnung 7 ist und zur Strahlformung des Pilotlichtstrahls 8 dient.

Wie Figur 3 zeigt, sind die Sendeoptiken 9 und das Optikelement 10 Bestandteil einer einstückigen Optikanordnung, die im vorliegenden Fall ein Linsenarray 11 ausbildet.

Wie Figur 3 weiter zeigt, sind die Sender 4 auf einer Leiterplatte 12 montiert. Generell kann auch eine Leiterplattenanordnung mit mehreren Leiterplatten 12 vorgesehen sein. Auf der Leiterplatte 12 ist weiterhin auch ein Sendeelement 13 als Bestandteil der Senderanordnung 7 montiert. Das Sendeelement 13 ist in Form eines LED-Chips ausgebildet. Dem Sendeelement 13 ist eine Blende 14 vorgelagert. Die Blende 14 liegt im Fokus des Optikelements 10, sodass mit dem Optikelement 10 der Rand der Blende nach unendlich abgebildet wird.

Die Sender 4 und das Sendeelement 13 sind so auf der Leiterplatte 12 fixiert, dass deren Strahlachsen parallel zueinander und senkrecht zur Ebene der Leiterplatte 12 verlaufen. Zur optischen Trennung der Lichtstrahlen 3 und der Pilotlichtstrahlen 8 ist eine Tubus-Anordnung 15 vorgesehen.

Ist die Senderanordnung 7 in der Empfangseinheit 1b integriert, ist die Konstruktion entsprechend der Figuren 2 und 3, wobei lediglich Sendeoptiken 9 durch Empfangsoptiken 17 und Sender 4 durch Empfänger 6 ersetzt sind.

Die Pilotlichtstrahlen 8 der Senderanordnung 7 in der Sendeeinheit 1a werden als sichtbarer Lichtfleck auf die Frontseite der Empfangseinheit 1b, die der Sendeeinheit 1a zugewandt ist, abgebildet. Damit die Pilotlichtstrahlen 8 gut sichtbar sind, sind in dem der Senderanordnung 7 gegenüberliegenden Bereich der Frontseite der Empfangseinheit 1b auf dem Gehäuse 5 als Visualisierungsmittel Reflektorflächen 16 aufgebracht. Vorzugsweise sind die Reflektorflächen 16 Bestandteile von Reflektorfolien, die auf das Gehäuse 5 aufgeklebt werden.

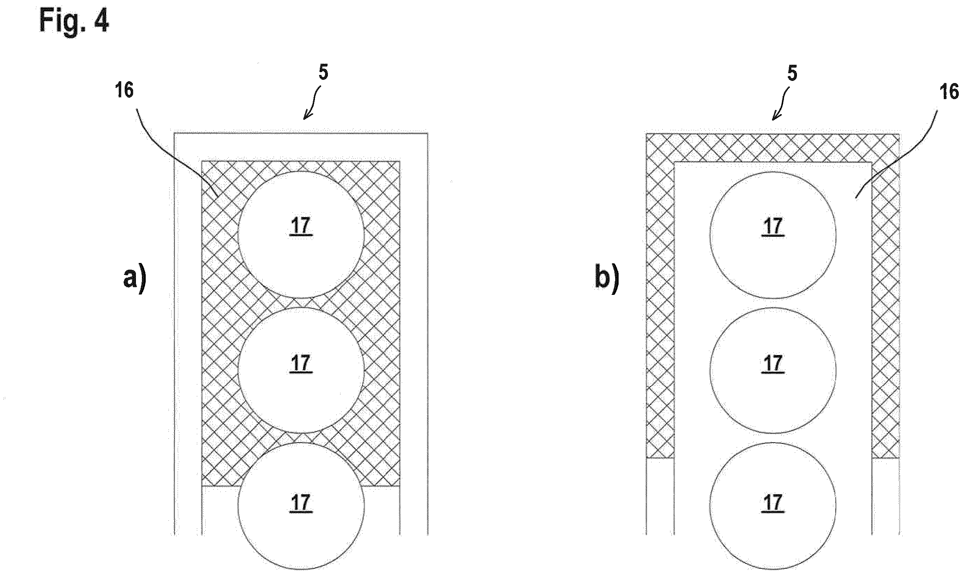

Die Figuren 4a, 4b zeigen hierfür zwei Ausführungsformen. Bei der Ausführungsform gemäß Figur 4a sind Reflektorflächen 16 im Bereich des Gehäuserahmens vorgesehen. Bei der Ausführungsform gemäß Figur 4b umgeben die Reflektorflächen 16 die Linsen, die Empfangsoptiken 17 ausbilden.

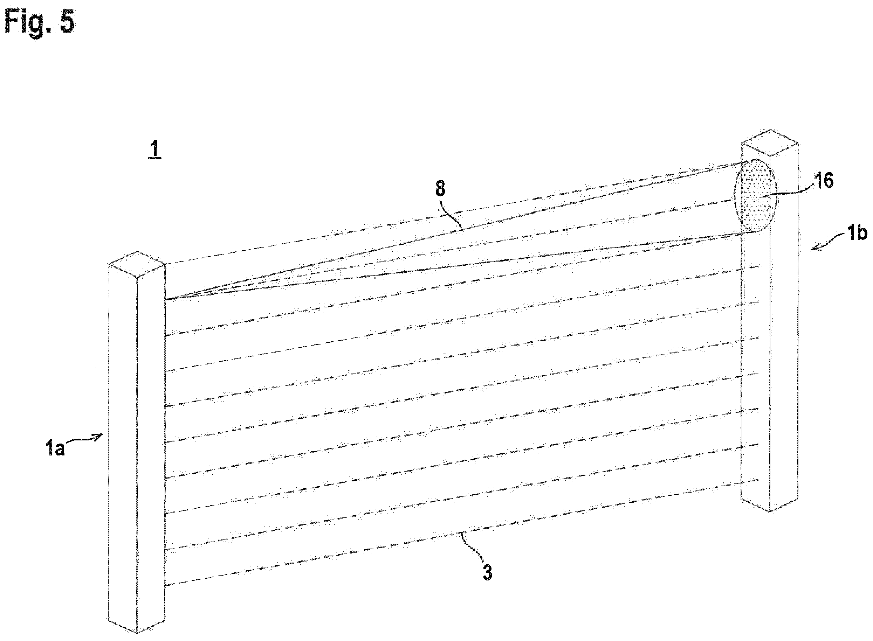

Figur 5 zeigt die Lichtschrankenanordnung nach erfolgter Justage, in der die Sendeeinheit 1a korrekt gegenüber der Empfangseinheit 1b ausgerichtet ist. Dies kann von einer Bedienperson dadurch festgestellt werden, dass die Pilotlichtstrahlen 8 als sichtbarer Lichtfleck mittig auf die Reflektorflächen 16 an der Empfangseinheit 1b abgebildet werden.

Fehlausrichtungen können von der Bedienperson dadurch erkannt werden, dass die Pilotlichtstrahlen 8 nicht mittig oder überhaupt nicht auf die Reflektorflächen 16 abgebildet werden.

### Bezugszeichenliste

- (1): Lichtvorhang
- (1a): Sendeeinheit
- (1b): Empfangseinheit
- (2): Gehäuse
- (3): Lichtstrahl
- (4): Sender
- (5): Gehäuse
- (6): Empfänger
- (7): Senderanordnung
- (8): Pilotlichtstrahl
- (9): Sendeoptik
- (10): Optikelement
- (11): Linsenarray
- (12): Leiterplatte
- (13): Sendeelement
- (14): Blende
- (15): Tubus-Anordnung
- (16): Reflektorfläche
- (17): Empfangsoptik

## Patentansprüche

1. Lichtschrankenanordnung zur Erfassung von Objekten in einem Überwachungsbereich mit einer Sendeeinheit (1a), welche wenigstens einen Lichtstrahlen (3) emittierenden Sender (4) aufweist, mit einer Empfangseinheit (1b), welche wenigstens einen Lichtstrahlen (3) empfangenden Empfänger (6) aufweist, und mit einer Auswerteeinheit, in welcher in Abhängigkeit von Empfangssignalen des Empfängers (6) ein Objektfeststellungssignal generiert wird, wobei in der Sendeeinheit (1a) und/oder in der Empfangseinheit (1b) eine Senderanordnung (7) integriert ist, welche sichtbare Pilotlichtstrahlen (8) in einer vorgegebenen Richtung relativ zu Strahlachsen des Senders (4) beziehungsweise Empfänger (6) emittiert und welche ein Mittel zur Ausrichtung der Sendeeinheit (1a) relativ zur Empfangseinheit (1b) ausbildet, **dadurch gekennzeichnet, dass** die oder jede Senderanordnung (7) ein Pilotlichtstrahlen (8) emittierendes Sendeelement (13) und ein Optikelement (10) aufweist, wobei das Sendeelement (13) im Fokus des Optikelements (10) angeordnet ist, und dass dem oder den Sendern (4) einerseits und dem oder den Empfängern (6) andererseits eine Optikanordnung zugeordnet ist, wobei das Optikelement (10) der wenigstens einen Senderanordnung (7) Bestandteil einer Optikanordnung ist.

2. Lichtschrankenanordnung nach Anspruch 1, **dadurch gekennzeichnet, dass** diese einen Lichtvorhang (1) mit mehreren Paaren von Lichtstrahlen (3) emittierenden Sendern und Lichtstrahlen (3) empfangenden Empfängern (6) ausbildet.

3. Lichtschrankenanordnung nach Anspruch1 oder 2, **dadurch gekennzeichnet, dass** der oder die Sender (4) einerseits und der oder die Empfänger (6) andererseits jeweils auf einer Leiterplattenanordnung angeordnet sind, und dass das Sendeelement (13) der wenigstens einen Senderanordnung (7) auf einer der Leiterplattenanordnungen angeordnet ist.

4. Lichtschrankenanordnung nach Anspruch 3, **dadurch gekennzeichnet, dass** die oder jede Leiterplattenanordnung eine Leiterplatte (12) umfasst.

5. Lichtschrankenanordnung nach einem der Ansprüche 1 - 4, **dadurch gekennzeichnet, dass** die oder jede Optikanordnung ein Linsenarray (11) ist.

6. Lichtschrankenanordnung nach einem der Ansprüche 1 - 5, **dadurch gekennzeichnet, dass** im Fokus des Optikelements (10) eine Blende (14) vorgesehen ist.

7. Lichtschrankenanordnung nach einem der Ansprüche 1 - 6, **dadurch gekennzeichnet, dass** in der Sendeeinheit (1a) und der Empfangseinheit (1b) jeweils wenigstens eine Senderanordnung (7) integriert sind, wobei die Senderanordnungen (7) identisch ausgebildet sind.

8. Lichtschrankenanordnung nach einem der Ansprüche 1 - 7, **dadurch gekennzeichnet, dass** die Sendeeinheit (1a) und die Empfangseinheit (1b) jeweils ein Gehäuse (2, 5) aufweisen, wobei in wenigstens einem Gehäuse (2, 5) eine Senderanordnung (7) integriert ist.

9. Lichtschrankenanordnung nach Anspruch 8, **dadurch gekennzeichnet, dass** eine Frontseite eines Gehäuses (5) ein Visualisierungsmittel ausbildet, auf welchem die Pilotlichtstrahlen (8) sichtbar sind.

10. Lichtschrankenanordnung nach Anspruch 9, **dadurch gekennzeichnet, dass** auf der Frontseite des Gehäuses (5) Reflektorflächen (16) vorgesehen sind.

11. Verfahren zur Justage einer Lichtschrankenanordnung gemäß einem der Ansprüche 1 - 10, **dadurch gekennzeichnet, dass** die Sendeeinheit (1a) oder Empfangseinheit (1b) mittels der in dieser integrierten Senderanordnung (7) justiert wird.

12. Verfahren nach Anspruch 11, **dadurch gekennzeichnet, dass** die von der Senderanordnung (7) emittierten Pilotlichtstrahlen (8) auf die gegenüberliegende Empfangseinheit (1b) oder Sendeeinheit (1a) abgebildet sind.

13. Verfahren nach Anspruch 12, **dadurch gekennzeichnet, dass** die Pilotlichtstrahlen (8) auf einer Frontseite der Empfangseinheit (1b) oder Sendeeinheit (1a) sichtbar abgebildet sind.

## Claims

1. A light barrier arrangement for detecting objects in a monitoring area, having a transmitting unit (1a) which has at least one transmitter (4) emitting light beams (3), having a receiving unit (1b) which has at least one receiver (6) receiving light beams (3), and having an evaluation unit in which an object detection signal is generated as a function of received signals from the receiver (6), a transmitter arrangement (7) being integrated in the transmitting unit (1a) and/or in the receiving unit (1b), which emits visible pilot light beams (8) in a predetermined direction relative to beam axes of the transmitter (4) or receiver (6) and which forms a means for aligning the transmitter unit (1a) relative to the receiver unit (1b), **characterised in that** said or each transmitter arrangement (7) has a transmitter element (13) emitting pilot light beams (8) and an optical element (10), the transmitting element (13) being arranged in the focus of the optical element (10), and **in that** an optical arrangement is assigned to the transmitter or transmitters (4) on the one hand and to the receiver or receivers (6) on the other hand, the optical element (10) of said at least one transmitter arrangement (7) being a component of an optical arrangement.

2. A light barrier arrangement according to claim 1, **characterised in that** it forms a light curtain (1) with several pairs of transmitters emitting light beams (3) and receivers (6) receiving light beams (3).

3. A light barrier arrangement according to claim 1 or 2, **characterised in that** the transmitter or transmitters (4) on the one hand and the receiver or receivers (6) on the other hand are each arranged on a printed circuit board arrangement and **in that** the transmitting element (13) of said at least one transmitter arrangement (7) is arranged on one of the printed circuit board arrangements.

4. A light barrier arrangement according to claim 3, **characterised in that** said or each printed circuit board arrangement comprises a printed circuit board (12).

5. A light barrier arrangement according to any one of claims 1-4, **characterised in that** said or each optical arrangement is a lens array (11).

6. A light barrier arrangement according to any one of claims 1-5, **characterised in that** a diaphragm (14) is provided at the focus of the optical element (10).

7. A light barrier arrangement according to one of the claims 1-6, **characterised in that** at least one transmitter arrangement (7) is integrated in each of the transmitter unit (la) and the receiver unit (1b), the transmitter arrangements (7) being of identical design.

8. A light barrier arrangement according to one of claims 1-7, **characterised in that** the transmitting unit (la) and the receiving unit (1b) each have a housing (2, 5), a transmitter arrangement (7) being integrated in at least one housing (2, 5).

9. A light barrier arrangement according to claim 8, **characterised in that** a front side of a housing (5) forms a visualisation means on which the pilot light beams (8) are visible.

10. A light barrier arrangement according to claim 9, **characterised in that** reflector surfaces (16) are provided on the front side of the housing (5).

11. A method for adjusting a light barrier arrangement according to one of the claims 1-10, **characterised in that** the transmitting unit (la) or receiving unit (1b) is adjusted by means of the transmitter arrangement (7) integrated therein.

12. A method according to claim 11, **characterised in that** the pilot light beams (8) emitted by the transmitter arrangement (7) are imaged onto the opposite receiver unit (1b) or transmitter unit (la).

13. A method according to claim 12, **characterised in that** the pilot light beams (8) are visibly imaged on a front side of the receiving unit (1b) or transmitting unit (la).

## Revendications

1. Agencementf de barrière lumineuse pour la détection d'objets dans une zone de surveillance, comportant une unité d'émission (la) qui présente au moins un émetteur (4) émettant des faisceaux lumineux (3), une unité de réception (1b) qui présente au moins un récepteur (6) recevant des faisceaux lumineux (3), et une unité d'évaluation dans laquelle un signal de détection d'objet est généré en fonction des signaux reçus du récepteur (6), un agencement d'émetteur (7) étant intégré dans l'unité d'émission (la) et/ou dans l'unité de réception (1b), qui émet des faisceaux lumineux pilotes visibles (8) dans une direction prédéterminée par rapport aux axes de faisceau de l'émetteur (4) ou du récepteur (6) et qui constitue un moyen pour aligner l'unité d'émission (la) par rapport à l'unité de réception (1b), **caractérisé en ce que** ledit ou chaque agencement d'émetteur (7) présente un élément émetteur (13) émettant des faisceaux lumineux pilotes (8) et un élément optique (10), l'élément émetteur (13) étant disposé dans le foyer de l'élément optique (10), et **en ce qu'**un agencement optique est associé à l'émetteur ou aux émetteurs (4) d'une part et au récepteur ou aux récepteurs (6) d'autre part, l'élément optique (10) dudit au moins un agencement d'émetteur (7) étant un composant d'un agencement optique.

2. Agencement de barrière lumineuse selon la revendication 1, **caractérisé en ce qu'**il forme un rideau lumineux (1) avec plusieurs paires d'émetteurs émettant des faisceaux lumineux (3) et de récepteurs (6) recevant des faisceaux lumineux (3).

3. Agencement de barrière lumineuse selon les revendications 1 ou 2, **caractérisé en ce que** le ou les émetteurs (4) d'une part et ledit ou les récepteurs (6) d'autre part sont chacun disposés sur un agencement de carte de circuit imprimé et **en ce que** l'élément émetteur (13) dudit au moins un agencement d'émetteur (7) est disposé sur l'un des agencements de carte de circuit imprimé.

4. Agencement de barrière lumineuse selon la revendication 3, **caractérisé en ce que** ledit ou chaque agencement de carte de circuit imprimé comprend une carte de circuit imprimé (12).

5. Agencement de barrière lumineuse selon l'une quelconque des revendications 1 à 4, **caractérisé en ce que** ledit ou chaque agencement optique est un réseau de lentilles (11).

6. Agencement de barrière lumineuse selon l'une quelconque des revendications 1-5, **caractérisé en ce qu'**un diaphragme (14) est prévu au foyer de l'élément optique (10).

7. Agencement de barrière lumineuse selon l'une des revendications 1-6, **caractérisé en ce qu'**au moins un agencement d'émetteur (7) est intégré dans chacune de l'unité d'émission (la) et de l'unité de réception (1b), les agencements d'émetteur (7) étant de conception identique.

8. Agencementf de barrière lumineuse selon l'une des revendications 1-7, **caractérisé en ce que** l'unité d'émission (la) et l'unité de réception (1b) comportent chacune un boîtier (2, 5), un dispositif d'émission (7) étant intégré dans au moins un boîtier (2, 5).

9. Agencementf de barrière lumineuse selon la revendication 8, **caractérisé en ce qu'**une face avant d'un boîtier (5) forme un moyen de visualisation sur lequel les faisceaux lumineux pilotes (8) sont visibles.

10. Agencement de barrière lumineuse selon la revendication 9, **caractérisé en ce que** des surfaces réfléchissantes (16) sont prévues sur la face avant du boîtier (5).

11. Procédé de réglage d'un agencement de barrière lumineuse selon l'une des revendications 1 à 10, **caractérisé en ce que** l'unité d'émission (la) ou l'unité de réception (1b) est réglée au moyen de l'agencement d'émetteur (7) qui y est intégré.

12. Procédé selon la revendication 11, **caractérisé en ce que** les faisceaux lumineux pilotes (8) émis par le dispositif émetteur (7) sont imagés sur l'unité réceptrice (1b) ou l'unité émettrice (la) opposée.

13. Procédé selon la revendication 12, **caractérisé en ce que** les faisceaux lumineux pilotes (8) sont imagés de manière visible sur une face avant de l'unité de réception (1b) ou de l'unité d'émission (la).
